# EUROPÄISCHE PATENTSCHRIFT

(11) **EP 1 152 854 B1**
(45) Veröffentlichungstag und Bekanntmachung des Hinweises auf die Patenterteilung: **17.09.2003**
(21) Anmeldenummer: 00906332.2
(22) Anmeldetag: 16.02.2000
(51) Int. Cl.: B22D 21/04, F27B 14/06, B22D 18/04

(54) **VERWENDUNG EINES INDUKTIONSTIEGELOFENS FÜR DAS NIEDERDRUCKGIESSEN VON GUSSSTÜCKEN AUS ALUMINIUM- UND MAGNESIUMLEGIERUNGEN**
USE OF A CRUCIBLE FURNACE HEATED BY INDUCTION FOR LOW-PRESSURE CASTING ARTICLES FROM ALUMINUM AND MAGNESIUM ALLOYS
UTILISATION D'UN FOUR A CREUSET CHAUFFE PAR INDUCTION POUR LA COULEE SOUS BASSE PRESSION D'ARTICLES EN ALLIAGES D'ALUMINUM ET MAGNESIUM

(30) Priorität: 19.02.1999 DE 19906939
(43) Veröffentlichungstag der Anmeldung: 14.11.2001
(73) Patentinhaber: Honsel GmbH & Co. KG, 59872 Meschede (DE)
(72) Erfinder: BRUNGS, Dieter, D-59872 Meschede-Eversberg (DE); KESSLER, Andreas, D-46535 Dinslaken (DE); DETTE, Manfred, D-40468 Düsseldorf (DE)
(74) Vertreter: Rehders, Jochen
(86) Internationale Anmeldenummer: EP0001255
(87) Internationale Veröffentlichungsnummer: WO00048770

(56) Entgegenhaltungen:
- EP-A- 0 426 350
- DE-A- 3 815 828
- DE-A- 19 626 175
- J.BERGER: "Erfahrungen einer österreichischen Leichtmetallgiesserei mit dem Niederdruck-Kokillenguss" GIESSEREI, Bd. 48, Nr. 19, 21. September 1961 (1961-09-21), Seiten 548-555, XP000907627 in der Anmeldung erwähnt
- J.BERGER: "Das Niederdruck-Kokillengiessverfahren in heutiger Sicht" GIESSEREI, Bd. 56, Nr. 4, 13. Februar 1969 (1969-02-13), Seiten 83-90, XP000907628 in der Anmeldung erwähnt

## Beschreibung

Die Erfindung betrifft die Verwendung eines Induktionstiegelofens mit ausreichender Schmelz- und Warmhalteleistung für das Herstellen von Gußteilen, insbesondere aus partikelverstärkten Aluminium- und Magnesiumlegierungen.

Beim Gießen von partikelverstärkten Aluminium- und Magnesiumlegierungen besteht das Problem, die Partikel in der Schmelze in Suspension zu halten, um im Gußteil eine homogene Verteilung der Partikel zu erhalten. Hierzu ist eine dauernde Schmelzebewegung erforderlich, die ein Absetzen der Partikel verhindert.

Dem steht das Bestreben entgegen, Gas- und Oxideinschlüsse aus der Schmelze zu entfernen bzw. derartige Einschlüsse zu vermeiden, was im wesentlichen dadurch erreichbar ist, daß die Schmelze möglichst ruhig gehalten wird und während des Gießvorgangs Turbulenzen vermieden werden. Das Niederdruck-Kokillengießverfahren mit fossiler oder Widerstandsbeheizung bzw. Induktionsrinne ist in dieser Hinsicht besonders geeignet, da die Schmelze sich in einem entsprechenden Ofen beruhigen kann und durch ein tief in die Schmelze eintauchendes Steigrohr mit geringer Geschwindigkeit mittels Gasdruck in eine oberhalb der Schmelze angeordnete Kokille oder Form gedrückt wird.

Aus dem Aufsatz: "Erfahrungen einer österreichischen Leichtmetallgießerei mit dem Niederdruck-Kokillenguß" von Johann Berger, erschienen in "Gießerei", 21. September 1961 und dem Aufsatz: "Das Niederdruck-Kokillengießverfahren in heutiger Sicht" von Johann Berger, erschienen in "Gießerei", 13. Februar 1969 ist ersichtlich, daß das Prinzip des induktiven Schmelzens beim Niederdruckguß von Aluminium-Legierungen angewendet werden kann. Die beschriebenen Schmelzanlagen werden jeweils nach dem Doppeltiegel-Prinzip betrieben. Das elektromagnetische Feld des (Netzfrequenz-) Induktors führt hauptsächlich zum Aufheizen nur des äußeren Gußeisentiegels. Infolge Wärmeleitung wird der in dem Gußeisentiegel befindliche Graphittiegel ebenfalls aufgeheizt, wodurch das in diesem Tiegel befindliche Schmelzgut aufgeschmolzen wird, indem ein Energietransport vom Graphittiegel in das Metall stattfindet.

Der Graugußtiegel hat in dieser Anwendung die Funktion, infolge des elektromagnetischen Feldes der Spule aufgeheizt zu werden, wozu er absichtlich dickwandig ausgeführt wird, um diese induzierte Wärme an den Graphittiegel weiterzuleiten. Der Graphittiegel hat die Funktion, die Aluminiumschmelze vor unerwünschten Reaktionen mit dem Gußeisentiegel zu schützen. Aufgrund des großen Aufwandes stellt dieses Konzept nicht die ideale Lösung dar und hat keine große Verbreitung gefunden. Der dickwandige Graugußtiegel bewirkt, daß das Schmelzgut gegen die induzierten Ströme abgeschirmt ist, so daß die Badbewegung nicht ausreicht, um beim Schmelzen von partikelverstärkten Leichtmetallegierungen die Partikel in Suspension halten zu können.

Auf der Suche nach geeigneten Methoden und Verfahren zum Schmelzen und Gießen partikelverstärkter Aluminiumlegierungen laufen weltweit Entwicklungen mit dem Ziel, auch mit dem induktiven Schmelzen in Verbindung mit geeigneten Tiegelmaterialien in dem Schmelzbad ein Strömungsbild zu erzeugen, das ausreichen kann, Partikel bestimmter Charakteristika in Suspension zu halten.

In der europäischen Patentanmeldung 0 662 361 und der deutschen Offenlegungsschrift DE 196 26 175 A1 sind Verfahren und Vorrichtungen zum Gießen von partikelverstärkten Aluminiumlegierungen beschrieben, bei denen unterhalb einer Form ein Füllrohr mit einem Füllkolben angeordnet ist. In das Füllrohr wird eine vorportionierte Menge des Gießmaterials eingebracht und anschließend durch Induktion aufgeschmolzen oder warmgehalten, wobei aufgrund der Induktion eine Verwirbelung der Schmelze mit dem Partikelverstärkungsmaterial erreicht wird. Es handelt sich hierbei jeweils um Einzelschmelzverfahren, mit dem Nachteil, daß das zu schmelzende Metall fiir das jeweilige Gußteil portioniert werden muß und das Verfahren in seiner Schmelzkapazität beschränkt ist, so daß materialintensive Gußteile daher nicht gefertigt werden können. Auch ist die Produktivität dieser genannten Verfahren nicht sehr hoch, da sich die Taktzeit aus Schmelzund Erstarrungszeit zusammensetzt und folglich niedrig liegt. Das eigentliche Gießen erfolgt, im Gegensatz zum Niederdruckguß, durch einen mechanischen Kolben, der die Schmelze bzw. das teigige Material von unten in die Form drückt.

Bei dem Lost Crucible Prozeß (LOC) wird ein Fasertiegel eingesetzt, der infolge der Formfüllung von unten beim Gießen zerstört wird, und folglich nur fiir einen Abguß verwendet werden kann, wodurch die Wirtschaftlichkeit des Verfahrens beeinträchtigt wird.

Der Erfindung liegt daher das Problem zugrunde, eine möglichst hohe Prozeßsicherheit, schnelle Taktzeit und hohes Ausbringen beim Herstellen von Gußteilen aus partikelverstärkten Aluminium- und Magnesiumlegierungen bei gleichzeitig möglichst großen Homogenität des Materials der Gußteile zu erreichen. Dieses Ziel wird durch die Verwendung eines Induktionstiegelofens zur Aufnahme eines Vorrats an Schmelzgut, der fiir eine größere Anzahl Gießvorgänge ausreicht, mit einem Futter oder Tiegel aus elektrisch nichtleitendem, feuerfestem Material mit direkter induktiver Beheizung (Induktionsspule) des darin befindlichen Schmelzgutes sowie mit einem in das Schmelzgut eintauchenden Steigrohr, welches zu einer oberhalb des unter Gasdruck setzbaren Schmelzgutspiegels befindlichen Gießform führt, für das Niederdruckgießen von Gußstücken aus einer partikelverstärkten Al- und Mg-Legierung erreicht.

Die Erfindung bietet gegenüber dem Stand der Technik folgende Vorteile:
1. Gegenüber der konventionellen Schmelztechnik fiir partikelverstärktes Material kann auf die aufwendige Schmelzebehandlung mittels mechanischen Rührens verzichtet werden.
2. Die Prozeßführung ist derart gestaltet, daß Gas- und Oxydeinschlüsse gegenüber der bisherigen Schmelz- und Gießtechnik für partikelverstärkte Legierungen reduziert sind.
3. Gegenüber dem Gießen mit verlorenem Tiegel werden Kosten für die Tiegel eingespart, das Verfahren ist flexibler, da als Vormaterial nicht nur Stranggußbolzen eingesetzt werden können.

Überraschenderweise hat sich gezeigt, daß die durch die induktive Beheizung bewirkte Bewegung der Schmelze zwar ausreicht, die Partikel in der Schmelze in Suspension zu halten, daß diese Bewegung der Schmelze jedoch nicht so intensiv ist, daß Gas- oder Oxydeinschlüsse vermehrt auftreten.

Der Induktionstiegelofen kann so gestaltet sein, daß das Schmelzgut in Form von Barren, Bolzen oder Vormaterialien eingegeben und aufgeschmolzen wird, so daß der Induktionstiegelofen sowohl zum Schmelzen als auch zum Warmhalten benutzt wird, oder daß bereits flüssiges Vormaterial eingegeben und im Induktionstiegelofen warmgehalten und gerührt wird.

Der Induktionstiegelofen kann so ausgestaltet sein, daß er das Schmelzgut direkt aufnimmt, jedoch ist es auch möglich, in den Induktionstiegelofen einen Tiegel für das Schmelzgut einzusetzen. Wesentlich ist in beiden Fällen, daß das Futter des Induktionstiegelofens bzw. der eingesetzte Tiegel aus einem unmagnetischen, elektrisch nichtleitenden, feuerfesten Material besteht, so daß die Wärmeentwicklung direkt im Schmelzgut eintritt.

Um den fiir das Niederdruck-Gießverfahren erforderlichen Gasdruck auf die Schmelzoberfläche aufbringen zu können, ist der Ofenraum durch eine Abschlußplatte verschlossen, die entweder gegenüber dem Induktionstiegelofen oder gegenüber dem in den Ofenraum eingesetzten Tiegel abgedichtet ist.

Der Induktionstiegelofen kann auch als Zwei-Kammer- oder Doppelofen ausgebildet sein, wobei die erste (Ofen-) Kammer zum Schmelzen und Reinigen mit einer höheren Frequenz und die über ein Ausgleichssystem verbundene zweite (Gieß-) Kammer mit niedriger Frequenz zum optimalen Warmhalten und Rühren beaufschlagt wird.

Das an der Abschlußplatte befestigte Steigrohr besteht aus unmagnetischem Material und kann zentral oder vorzugsweise in Wandnähe im Bereich großer Induktion angeordnet sein, so daß die Feldkräfte der Induktionsspule auch im Steigrohr für ein Durchmischen der Schmelze sorgen und die Partikel auch im Steigrohr in Suspension bleiben.

Die Induktionsspule kann als Voll- oder Kurzspule bzw. aus mehreren Teilspulen ausgebildet und so angeordnet und geschaltet sein, daß sie zum Aufschmelzen beispielsweise über die gesamte Höhe des Ofenraums und zum Warmhalten und Rühren nur im unteren Bereich des Ofenraums einschaltbar ist.

Des weiteren ist es möglich, die Induktionsspule zum Aufschmelzen mit einer hohen Frequenz, jedoch zum Warmhalten und Rühren mit einer niedrigen Frequenz zu beaufschlagen. Vorzugsweise kann dabei die Aufschmelzfrequenz über 500 Hz liegen und die Warmhalte- und Rührfrequenz kann gleich oder kleiner als 50 Hz sein.

Der möglichst turbulenzfreie Gießvorgang kann durch Unterdruckbeaufschlagung der Gießform unterstützt werden, so daß auf die Schmelzoberfläche nur ein geringerer Überdruck zu wirken braucht.

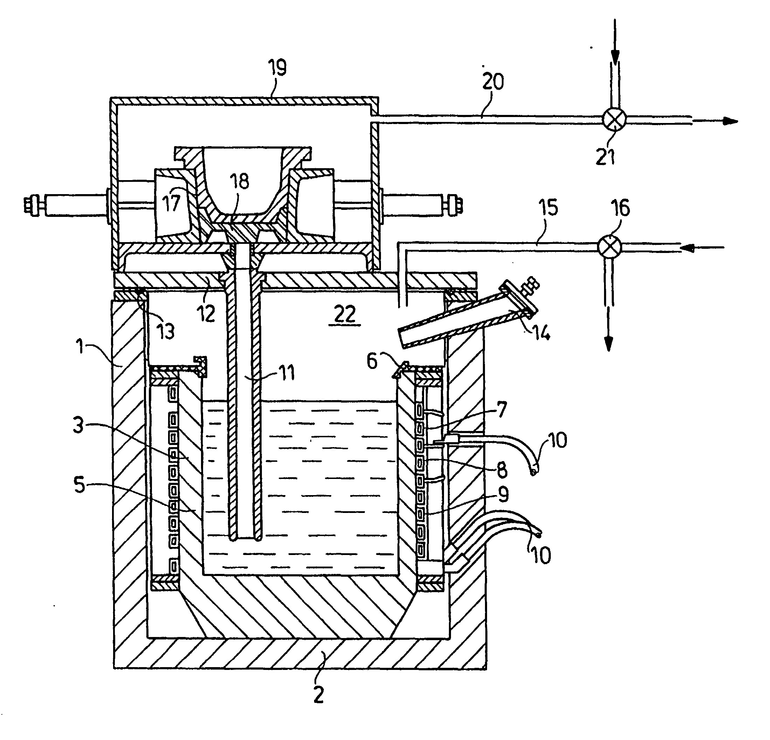

Die Erfindung wird nachstehend anhand eines in der Zeichnung dargestellten Ausführungsbeispiels des näheren erläutert. Die Zeichnung zeigt ein Schnittbild durch einen erfindungsgemäß verwendeten Induktionstiegelofen zur Verwendung mit dem Niederdruckgußverfahren zum Herstellen von Gußteilen aus partikelverstärkten Aluminiumund Magnesiumlegierungen.

Der Induktionstiegelofen weist einen äußeren Ofenmantel 1 und eine Ofengrundplatte 2 auf, die überwiegend der Dichtung, Isolierung und dem Berührungsschutz dienen. Eine Abschirmung für das Feld durch Joche ist zwischen dem äußeren Ofenmantel 1 und der Spule angeordnet. Die Induktionsspule besteht im dargestellten Ausführungsbeispiel aus drei Teilen 7, 8, 9. Der Tiegel 5 besteht aus einem der Schmelzetemperatur widerstehenden, vorzugsweise unmagnetischen und elektrisch nichtleitenden Material.

Im dargestellten Ausführungsbeispiel ist der obere Rand des Tiegels 5 mittels einer Tiegeldichtung 6 gegenüber dem inneren Ofenmantel 3 abgedichtet, und durch entsprechende Auslegung wird eine unzulässige Erwärmung der Konstruktion vermieden. Die Spule aus den Teilen 7, 8, 9 wird über Kabelanschlüsse 10 mit Wechselstrom beaufschlagt, wobei die Spulenteile 7, 8, 9 einzeln, gemeinsam oder in verschiedenen Kombinationen mit Wechselstrom beaufschlagbar sind.

Auf die Oberkante des äußeren Ofenmantels 1 ist eine Ofenabschlußplatte 12 aufgelegt und mittels einer Dichtung 13 gegenüber dem Ofenraum 22 abgedichtet. An der Ofenabschlußplatte 12 ist ein Steigrohr 11 befestigt, das in die Schmelze eintaucht. Dieses Steigrohr 11 besteht vorzugsweise aus einem elektrisch nichtleitenden und unmagnetischen Material und ist beim dargestellten Ausführungsbeispiel in Wandnähe des Tiegels 5 im Bereich großer Induktionen angeordnet, jedoch kann das Steigrohr auch zentral in den Tiegel 5 eintauchen.

Seitlich in dem äußeren Ofenmantel 1 ist eine Füllöffnung 14 mit Verschluß angeordnet, durch die sich Vormaterial in Form von Bolzen, Barren oder dergleichen oder auch bereits flüssiges Vormaterial in den Tiegel 5 einbringen läßt. In den Ofenraum 22 mündet eine Druckleitung 15, die sich mittels eines Drei-Wege-Ventils 16 mit einer Druckquelle bzw. mit der freien Atmosphäre verbinden läßt.

Auf der Ofenabschlußplatte 12 ist eine Form bzw. Kokille 17 angeordnet, in der ein Gußteil 18 dargestellt ist. Die Form oder Kokille ist vollständig von einer abgedichteten Haube 19 umgeben, die sich über eine Unterdruckleitung 20 und ein Drei-Wege-Ventil 21 wahlweise mit Unterdruck und dem Atmosphärendruck beaufschlagen läßt.

Zum Schmelzen von in Form von Bolzen, Barren oder dergleichen bei angehobenen Steigrohr 11 und Ofenschlußplatte 12 eingebrachtem Vormaterial werden alle Spulenteile 7, 8, 9 mit einer Frequenz größer als 500 Hz beaufschlagt, bei dieser Frequenz ist die Rührwirkung nicht sehr stark ausgeprägt, reicht jedoch aus, um die im Tiegel 5 befindliche Schmelze so weit in Bewegung zu halten, daß die Partikel in Suspension verbleiben. Bevorzugterweise wird zum Warmhalten und Rühren der Schmelze nur der untere Teil 9 der Induktionsspule mit einer niedrigen Frequenz gleich oder kleiner als 50 Hz beaufschlagt. Bei dieser niedrigen Frequenz ist die Rührwirkung stärker, durch die Beaufschlagung des unteren Spulenteils 9 jedoch auf die Schmelze im unteren Bereich des Tiegels 5 beschränkt, so daß aus dem Ofenraum 22 keine Gaseinschlüsse und von der Schmelzeoberfläche her kein Eindringen von Oxyden zu befürchten ist. Das Steigrohr 11 befindet sich im Bereich hoher Feldkräfte in der Nähe der Induktionsspule, so daß auch im Steigrohr 11 selber eine ständige Durchmischung der Schmelze mit den Partikeln gewährleistet ist und während des Gießvorgangs eine homogene, partikelverstärkte Aluminium- oder Magnesiumlegierung in die Kokille 17 fließt.

Beim dargestellten Ausführungsbeispiel wird die Druckbeaufschlagung des Ofenraums 22 über die Druckleitung 15 durch eine Unterdruckbeaufschlagung der Form bzw. Kokille 17 unterstützt. Hierzu dient die abgedichtete Haube 19, deren Innenraum über die Unterdruckleitung 20 und das Drei-Wege-Ventil 21 mit Unterdruck beaufschlagbar ist. Der Gießvorgang wird durch Druckbeaufschlagung des Ofenraums 22 und Unterdruckbeaufschlagung der Form oder Kokille 17 eingeleitet, so daß die Schmelze im Steigrohr 11 aufsteigt und in die Form oder Kokille 17 fließt. Das Füllen der Form oder Kokille erfolgt möglichst turbulenzfrei und ergibt das dargestellte Gußteil 18. Wenn das Gußteil 18 erstarrt ist, werden die Drei-Wege-Ventile 16, 21 mit der Atmosphäre verbunden, so daß die noch flüssige Schmelze im Steigrohr 11 in den Tiegel 5 zurückfließt. Danach wird das Gußteil 18 entformt, und ein weiterer Gießvorgang kann in derselben Weise ablaufen.

Die Unterdruckbeaufschlagung der Form bzw. Kokille 17 ist nicht zwingend erforderlich, sondern nur für bestimmte Gußteile und Legierungen vorteilhaft. Die Erfindung erstreckt sich daher auch auf die Verwendung eines Induktionstiegelofens für den Niederdruckguß und andere Gießverfahren, z. B. Druckgießverfahren, Squeeze-Casting, Rheo-Casting u.a.

Wenn der Überdruck im Ofenraum 22 nicht durch Druckluft, sondern mittels eines anderen, unter Druck gesetzten Gases, beispielsweise Stickstoff oder Edelgas erzeugt wird, kann es vorteilhaft sein, dieses Gas beim Umschalten des Drei-Wege-Ventils 16 nicht in die Atmosphäre, sondern in einen Auffangbehälter zu leiten, um es wiederverwenden zu können.

## Patentansprüche

1. Die Verwendung eines Induktionstiegelofens (1, 2) mit einem Futter oder Tiegel (5) aus elektrisch nichtleitendem, feuerfestem Material zur Aufnahme eines Vorrats an Schmelzgut, der für eine größere Anzahl Gießvorgänge ausreicht, mit direkter induktiver Beheizung (Induktionsspule 7 - 9) des darin befindlichen Schmelzgutes sowie mit einem in das Schmelzgut eintauchenden Steigrohr (11), welches zu einer oberhalb des unter Gasdruck setzbaren Schmelzgutspiegels befindlichen Gießform (17) führt, für das Niederdruckgießen von Gußstücken aus einer partikelverstärkten Alund Mg-Legierung.

2. Verwendung eines Induktionstiegelofen gemäß Anspruch 1, bei dem der Ofenraum (22) durch eine Abschlußplatte (12) verschlossen ist, die gegenüber dem Induktionstiegelofen (1, 2) oder gegenüber dem Tiegel (5) abgedichtet ist, so daß eine unzulässige Erwärmung der Konstruktion vermieden wird.

3. Verwendung eines Induktionstiegelofen nach Anspruch 2, der als Zweikammer- oder Doppelofen ausgebildet ist, wobei die erste Kammer zum Schmelzen und Reinigen mit einer höheren Frequenz und die über ein Ausgleichsystem verbundene zweite Kammer mit niedrigerer Frequenz zum optimalen Warmhalten und Rühren beaufschlagt ist.

4. Verwendung eines Induktionstiegelofen nach Anspruch 2 oder 3, bei dem ein an der Abschlußplatte (12) befestigtes Steigrohr (11) aus unmagnetischem Material in Wandnähe im Bereich großer Induktion angeordnet ist.

5. Verwendung eines Induktionstiegelofen nach einem der Ansprüche 2 bis 4, bei dem die Induktionsspule (7, 8, 9) als mehrteilige Spule ausgebildet ist.

6. Verwendung eines Induktionstiegelofen nach einem der Ansprüche 2 bis 5, bei dem die Induktionsspule (7, 8, 9) so angeordnet und geschaltet ist, daß sie zum Aufschmelzen über die gesamte Höhe des Ofenraums (22) und zum Warmhalten und Rühren nur im unteren Bereich des Ofenraums (22) einschaltbar ist.

7. Verwendung eines Induktionstiegelofen nach einem der Ansprüche 2 bis 6, bei dem die Induktionsspule (7, 8, 9) zum Aufschmelzen mit einer hohen Frequenz und der Induktionsspulenteil (9) zum Warmhalten und Rühren mit einer niedrigen Frequenz beaufschlagbar ist.

8. Verwendung eines Induktionstiegelofen nach Anspruch 7, bei dem die Aufschmelzfrequenz mehr als 500 Hz beträgt und die Warmhalte- und Rührfrequenz gleich oder kleiner als 50 Hz ist.

9. Verwendung eines Induktionstiegelofen nach einem der Ansprüche 2 bis 8, bei dem der möglichst turbulenzfreie Gießvorgang durch Unterdruckbeaufschlagung der Gießform (17) unterstützt wird.

## Claims

1. The use of an induction crucible furnace (1, 2) with a lining or crucible (5) of electrically non-conductive, refractory material for receiving a stock of melting charge which is sufficient for a relatively large number of casting operations, with direct inductive heating (induction coil 7-9) of the melting charge located therein and also with a standpipe (11) which dips into the melting charge and which leads to a casting mould (17) located above the level of the melting charge which can be placed under gas pressure, for the low-pressure casting of castings made from a particle-reinforced Al and Mg alloy.

2. The use of an induction crucible furnace according to Claim 1, in which the furnace chamber (22) is closed by a closure plate (12) which is sealed off with respect to the induction crucible furnace (1, 2) or with respect to the crucible (5), so that impermissible heating of the structure is avoided.

3. The use of an induction crucible furnace according to Claim 2, which is in the form of a dual-chamber furnace or double furnace, the first chamber being acted upon by a higher frequency for melting and purifying and the second chamber, which is connected via an equalisation system, being acted upon by a lower frequency for optimum holding and agitation.

4. The use of an induction crucible furnace according to Claim 2 or 3, in which a standpipe (11) of non-magnetic material fastened to the closure plate (12) is arranged in the vicinity of the wall in the region of high induction.

5. The use of an induction crucible furnace according to one of Claims 2 to 4, in which the induction coil (7, 8, 9) is in the form of a multi-part coil.

6. The use of an induction crucible furnace according to one of Claims 2 to 5, in which the induction coil (7, 8, 9) is arranged and connected such that for smelting it can be switched on over the entire height of the furnace chamber (22) and for holding and agitation can be switched on only in the lower region of the furnace chamber (22).

7. The use of an induction crucible furnace according to one of Claims 2 to 6, in which the induction coil (7, 8, 9) for smelting can be acted upon by a high frequency and the induction coil part (9) can be acted upon by a low frequency for holding and agitation.

8. The use of an induction crucible furnace according to Claim 7, in which the smelting frequency is more than 500 Hz and the holding and agitation frequency is equal to or less than 50 Hz.

9. The use of an induction crucible furnace according to one of Claims 2 to 8, in which the casting operation, which is as free of turbulence as possible, is supported by supplying a partial vacuum to the casting mould (17).

## Revendications

1. Utilisation d'un four à creuset à induction (1, 2) avec un garnissage ou creuset (5) en un matériau réfractaire, électriquement non conducteur, destiné à recevoir une réserve de produit en fusion qui suffit pour un grand nombre d'opérations de coulée, avec chauffage inductif direct (bobine d'induction 7-9) du produit en fusion se trouvant à l'intérieur ainsi qu'avec un tube ascendant (11) plongeant dans le produit en fusion, qui mène à un moule de coulée (17) se trouvant au-dessus du niveau du produit en fusion à placer sous une pression de gaz, pour la coulée sous basse pression de pièces en fonte constituées d'un alliage d'aluminium et de magnésium renforcé aux particules.

2. Utilisation d'un four à creuset à induction selon la revendication 1 dans lequel l'enceinte du four (22) est fermée par une plaque de terminaison (12) qui est rendue étanche par rapport au four à creuset à induction (1, 2) ou par rapport au creuset (5), de manière à éviter un échauffement inadmissible de la structure.

3. Utilisation d'un four à creuset à induction selon la revendication 2, qui est réalisé sous la forme d'un four à deux chambres ou four double, la première chambre étant soumise, pour la fusion et l'épuration, à une fréquence supérieure et la deuxième chambre, reliée par un système d'équilibrage, à une fréquence inférieure pour le maintien à la chaleur optimale et l'agitation.

4. Utilisation d'un four à creuset à induction selon la revendication 2 ou 3, dans lequel un tube ascendant (11) en matériau non magnétique, fixé à la plaque de terminaison (12), est disposé à proximité de la paroi dans la zone de grande induction.

5. Utilisation d'un four à creuset à induction selon l'une des revendications 2 à 4, dans lequel la bobine d'induction (7, 8, 9) est réalisée sous la forme d'une bobine en plusieurs parties.

6. Utilisation d'un four à creuset à induction selon l'une des revendications 2 à 5 dans lequel la bobine d'induction (7, 8, 9) est disposée et couplée de manière qu'elle puisse être mise en service pour la fusion sur toute la hauteur de l'enceinte du four (22) et pour le maintien en chaleur et l'agitation uniquement dans la zone inférieure de l'enceinte du four (22).

7. Utilisation d'un four à creuset à induction selon l'une des revendications 2 à 6, dans lequel la bobine d'induction (7, 8, 9) peut être soumise, pour la fusion, à une fréquence élevée et la partie de bobine d'induction (9) pour le maintien en chaleur et l'agitation, à une basse fréquence.

8. Utilisation d'un four à creuset à induction selon la revendication 7, dans lequel la fréquence de fusion est supérieure à 500 Hz et la fréquence de maintien en chaleur et d'agitation est égale ou inférieure à 50 Hz.

9. Utilisation d'un four à creuset à induction selon l'une des revendications 2 à 8, dans lequel l'opération de coulée avec aussi peu de turbulences que possible est favorisée par mise sous dépression du moule de coulée (17).
